(19) **Europäisches Patentamt / European Patent Office / Office européen des brevets**

(11) **EP 2 070 199 B1**

(12) **FASCICULE DE BREVET EUROPEEN**

(45) Date de publication et mention
de la délivrance du brevet:
**31.03.2010 Bulletin 2010/13**

(21) Numéro de dépôt: **07858485.1**

(22) Date de dépôt: **01.10.2007**

(51) Int Cl.:
**H04B 1/69** $^{(2006.01)}$

(86) Numéro de dépôt international:
**PCT/FR2007/052052**

(87) Numéro de publication internationale:
**WO 2008/040906 (10.04.2008 Gazette 2008/15)**

(54) **PROCÉDÉ DE CODAGE SPATIO-TEMPOREL POUR SYSTÈME DE COMMUNICATION MULTI-ANTENNE DE TYPE UWB IMPULSIONNEL**

VERFAHREN ZUR RÄUMLICHEN UND ZEITLICHEN KODIERUNG FÜR EINE MEHRANTENNEN-KOMMUNIKATIONSVORRICHTUNG MIT UWB-IMPULSEN

METHOD OF SPATIO-TEMPORAL CODING FOR MULTI-ANTENNA COMMUNICATION SYSTEM OF PULSED UWB TYPE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.10.2006 FR 0654064**

(43) Date de publication de la demande:
**17.06.2009 Bulletin 2009/25**

(73) Titulaire: **Commissariat A L'Energie Atomique - CEA**
**75015 Paris (FR)**

(72) Inventeur: **ABOU RJEILY, Chadi**
**Zahle (LB)**

(74) Mandataire: **Ilgart, Jean-Christophe et al**
**Brevalex**
**3, rue du Docteur Lancereaux**
**75008 Paris (FR)**

(56) Documents cités:
**EP-A- 1 681 819**

- **CHADI ABOU-RJEILY ET AL: "SPACE-TIME CODING FOR MULTIUSER ULTRA-WIDEBAND COMMUNICATIONS" INTERNET CITATION, [Online] 13 septembre 2005 (2005-09-13), XP008071459 Extrait de l'Internet: URL:http://www.comelec.enst.fr/~belfiore/U WB_MIMO.pdf> [extrait le 2006-11-15]**

- **BACCARELLI E ET AL: "A simple multi-antenna transceiver for ultra wide band based 4GWLANs" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 3, 21 mars 2004 (2004-03-21), pages 1782-1787, XP010708212 ISBN: 0-7803-8344-3**
- **TYAGI A ET AL: "M-PAM space time trellis codes for multi-antenna ultra-wideband communications" 23 janvier 2005 (2005-01-23), PERSONAL WIRELESS COMMUNICATIONS, 2005. ICPWC 2005. 2005 IEEE INTERNATIONAL CONFERENCE ON NEW DELHI, INDIA JAN. 23-25, 2005, PISCATAWAY, NJ, USA,IEEE, PAGE(S) 308-311 , XP010798569 ISBN: 0-7803-8964-6 le document en entier**
- **HELIOT F ET AL: "Performance of space-time block coding and space-time trellis coding for impulse radio" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, 29 novembre 2004 (2004-11-29), pages 3225-3229, XP010758316 ISBN: 0-7803-8794-5**

Printed by Jouve, 75001 PARIS (FR)

**Description**

**DOMAINE TECHNIQUE**

La présente invention concerne à la fois le domaine des télécommunications en ultra-large bande ou UWB (*Ultra Wide Band*) et celui des systèmes multi-antenne à codage spatio-temporel ou STC (*Space Time Coding*).

**ÉTAT DE LA TECHNIQUE ANTÉRIEURE**

Les systèmes de télécommunication sans fil de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classique (ou SISO pour Single Input Single Output). Cette diversité spatiale est généralement complétée par une diversité temporelle au moyen d'un codage spatio-temporel. Dans un tel codage, un symbole d'information à transmettre se trouve codé sur plusieurs antennes et plusieurs instants de transmission. On connaît deux grandes catégories de systèmes MIMO à codage spatio-temporel : les systèmes à codage en treillis ou STTC (*Space Time Trellis Coding*) et les systèmes à codage par blocs ou STBC (*Space Time Block Coding*). Dans un système à codage en treillis, le codeur spatio-temporel peut être vu comme une machine à états finis fournissant $P$ symboles de transmission aux $P$ antennes en fonction de l'état courant et du symbole d'information à coder. Le décodage à la réception est réalisé par un algorithme de Viterbi multidimensionnel dont la complexité augmente de manière exponentielle en fonction du nombre d'états. Dans un système à codage par blocs, un bloc de symboles d'information à transmettre est codé en une matrice de symboles de transmission, une dimension de la matrice correspondant au nombre d'antennes et l'autre correspondant aux instants consécutifs de transmission.

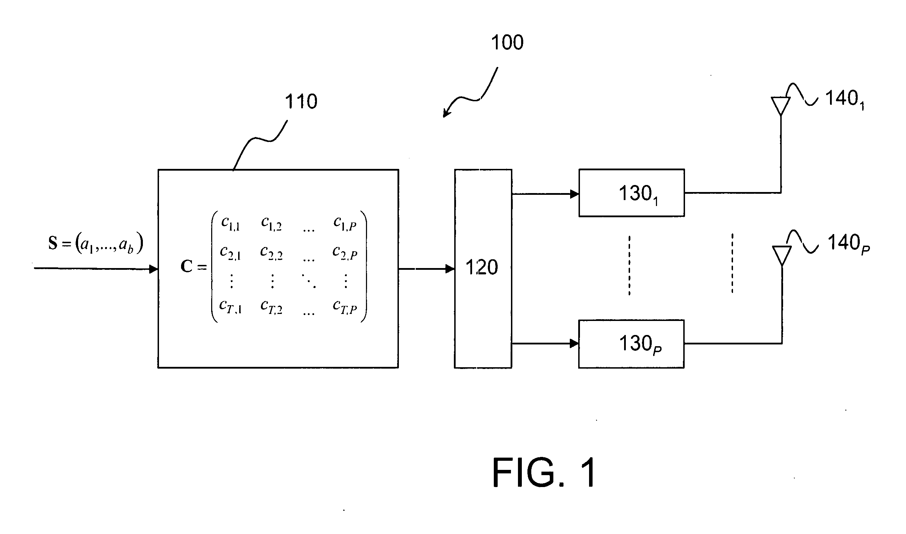

La Fig. 1 représenté schématiquement un système de transmission MIMO 100 avec codage STBC. Un bloc de symboles d'information $\mathbf{S}=(a_1,...,a_b)$ par exemple un mot binaire de b bits ou plus généralement de $b$ symboles M-aires est codé en une matrice spatio-temporelle :

$$\mathbf{C} = \begin{pmatrix} c_{1,1} & c_{1,2} & \ldots & c_{1,P} \\ c_{2,1} & c_{2,2} & \ldots & c_{2,P} \\ \vdots & \vdots & \ddots & \vdots \\ c_{T,1} & c_{T,2} & \ldots & c_{T,P} \end{pmatrix} \tag{1}$$

où les coefficients $c_{t,p}$, $t=1,..,T;p=1,..,P$ du code sont en règle générale des coefficients complexes dépendant des symboles d'information, $P$ est le nombre d'antennes utilisées à l'émission, $T$ est un entier indiquant l'extension temporelle du code, c'est-à-dire le nombre d'instants d'utilisation du canal ou PCUs (*Per Channel Use*).

La fonction $f$ qui à tout vecteur $\mathbf{S}$ de symboles d'information fait correspondre le mot de code spatio-temporel $\mathbf{C}$ est appelée fonction de codage. Si la fonction $f$ est linéaire on dit que le code spatio-temporel est linéaire. Si les coefficients $c_{t,p}$ sont réels le code spatio-temporel est dit réel.

Sur la Fig. 1, on a désigné par 110 un codeur spatio-temporel. A chaque instant d'utilisation de canal t, le codeur fournit au multiplexeur 120 le *t-ème* vecteur-ligne de la matrice $\mathbf{C}$. Le multiplexeur transmet aux modulateurs $130_1,...,130_P$ les coefficients du vecteur ligne et les signaux modulés sont transmis par les antennes $140_1,...,140_P$.

Le code spatio-temporel est caractérisé par son débit, c'est-à-dire par le nombre de symboles d'information qu'il transmet par instant d'utilisation de canal (PCU). Le code est dit à plein débit s'il est $P$ fois plus élevé que le débit relatif à une utilisation mono-antenne (SISO).

Le code spatio-temporel est caractérisé en outre par sa diversité qui peut être définie comme le rang de la matrice $\mathbf{C}$. On aura une diversité maximale si pour deux mots de code $\mathbf{C}_1$ et $\mathbf{C}_2$ quelconques correspondant à deux vecteurs $\mathbf{S}_1$ et $\mathbf{S}_2$, la matrice $\mathbf{C}_1 - \mathbf{C}_2$ est de rang plein.

Le code spatio-temporel est enfin caractérisé par son gain de codage qui traduit la distance minimale entre différents mots du code. On peut le définir comme :

$$\min_{\mathbf{C}_1 \neq \mathbf{C}_2} \det\left( (\mathbf{C}_1 - \mathbf{C}_2)^H (\mathbf{C}_1 - \mathbf{C}_2) \right) \qquad (2)$$

ou, de manière équivalente, pour un code linéaire :

$$\min_{\mathbf{C} \neq \mathbf{0}} \det\left( \mathbf{C}^H \mathbf{C} \right) \qquad (3)$$

où det($\mathbf{C}$) signifie le déterminant de $\mathbf{C}$ et $\mathbf{C}^H$ est la matrice conjuguée transposée de $\mathbf{C}$. Pour une énergie de transmission par symbole d'information, le gain de codage est borné.

En règle générale, le gain de codage n'est pas fixe mais décroît avec l'ordre de modulation d'information, ordre dont dépend l'efficacité spectrale. Dans certains cas, lorsque l'efficacité spectrale augmente, le gain de codage ne tend pas vers zéro mais vers une valeur asymptotique non nulle. Un tel code est dit à déterminant sans anéantissement.

On veille enfin à ce que l'énergie moyenne transmise par le système soit uniformément répartie entre antennes et instants de transmission.

On appelle code parfait un code à plein débit, à diversité maximale, à déterminant sans anéantissement et à énergie répartie au sens ci-dessus.

Un exemple de tel codage spatio-temporel pour un système MIMO à deux antennes de transmission a été proposé dans l'article de J-C Belfiore et al. intitulé « The Golden code : a 2x2 full-rate space-time code with non-vanishing determinants » publié dans IEEE Transactions on Information Theory, vol. 51, N° 4, pages 1432-1436, Avril 2005.

Le code proposé, dit code d'or, est basé sur une double extension algébrique $\mathbf{K}$ du corps des nombres rationnels $\mathbf{Q} : \mathbf{K} = \mathbf{Q}(i, \theta)$ où $i = \sqrt{-1}$ est racine du polynôme $X^2 + 1$ et $\theta$ est le nombre d'or $\theta = \dfrac{1 + \sqrt{5}}{2}$, racine du polynôme $X^2 - X - 1$. Le code d'or peut être représenté par la matrice suivante :

$$\mathbf{C}_{gold} = \begin{pmatrix} \alpha(a_1 + \theta a_2) & \alpha(a_3 + \theta a_4) \\ i\alpha_1(a_3 + \theta_1 a_4) & \alpha_1(a_1 + \theta_1 a_2) \end{pmatrix} \qquad (4)$$

où $\mathbf{S} = (a_1, a_2, a_3, a_4)$ est un vecteur de symboles d'information. $a_1, a_2, a_3, a_4$ sont des symboles complexes d'une constellation $2^b$-QAM, sous-ensemble de $\mathbf{Z}[i]$ où $\mathbf{Z}$ est l'anneau des entiers. $\theta_1 = \dfrac{1 + \sqrt{5}}{2}$ est la racine conjuguée de $\theta$, $\alpha = 1 + i(1 - \theta)$ et $\alpha_1 = 1 + i(1 - \theta_1)$.

On trouvera également des exemples de codes spatio-temporels parfaits pour un système MIMO à 2,3,4 ou 6 antennes de transmission dans l'article de Frédérique Oggier et al. intitulé «Perfect space time block codes» soumis à publication dans IEEE Transactions on Information Theory et disponible sous le site www.comelec.enst.fr/~belfiore.

Un autre domaine des télécommunications fait actuellement l'objet de recherches considérables. Il s'agit des systèmes de télécommunication UWB, pressentis notamment pour le développement des futurs réseaux personnels sans fil (WPAN). Ces systèmes ont pour spécificité de travailler directement en bande de base avec des signaux très large bande. On entend généralement par signal UWB un signal conforme au masque spectral stipulé dans la réglementation du FCC du 14 Février 2002 et révisé en Mars 2005, c'est-à-dire pour l'essentiel un signal dans la bande spectrale 3.1 à 10.6 GHz et présentant une largeur de bande d'au moins 500 MHz à -10dB. En pratique, on connaît deux types de signaux UWB, les signaux multi-bande OFDM (MB-OFDM) et les signaux UWB de type impulsionnel. Nous nous intéresserons par la suite uniquement à ces derniers.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal issu ou à destination d'un utilisateur $k$ peut alors s'écrire sous la forme:

$$s_k(t) = \sum_{n=0}^{N_s-1} w(t - nT_s - c_k(n)T_c) \qquad (5)$$

où $w$ est la forme de l'impulsion élémentaire, $T_c$ est une durée bribe (ou chip), $T_s$ est la durée d'un intervalle élémentaire avec $N_s=N_cT_c$ où $N_c$ est le nombre de chips dans un intervalle, la trame totale étant de durée $T_f=N_sT_s$ où $N_s$ est le nombre d'intervalles dans la trame. La durée de l'impulsion élémentaire est choisie inférieure à la durée chip, soit $T_w \leq T_c$. La séquence $c_k(n)$ pour n=0,..,$N_s$-1 définit le code de saut temporel de l'utilisateur $k$. Les séquences de sauts temporels sont choisies de manière à minimiser le nombre de collisions entre impulsions appartenant à des séquences de saut temporel d'utilisateurs différents.

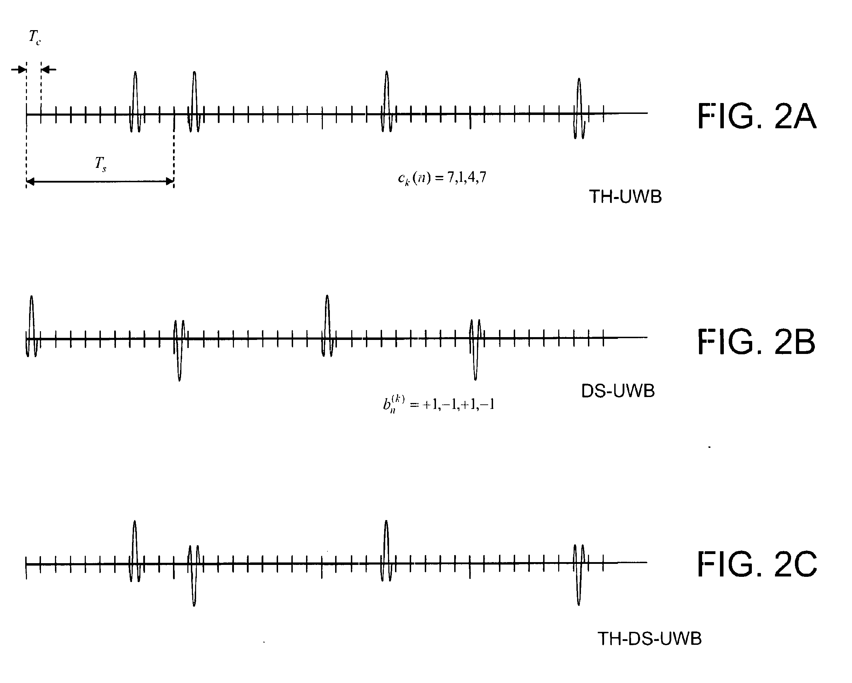

On a représenté en Fig. 2A un signal TH-UWB associé à un utilisateur $k$. Afin de transmettre un symbole d'information donné en provenance ou à destination d'un utilisateur $k$, on module généralement le signal TH-UWB à l'aide d'une modulation de position (PPM pour *Pulse Position Modulation*), soit pour le signal modulé :

$$s_k(t) = \sum_{n=0}^{N_s-1} w(t - nT_s - c_k(n)T_c - d_k\varepsilon) \qquad (6)$$

où $\varepsilon$ est un retard de modulation (*dither*) sensiblement inférieur à la durée chip $T_c$ et $d_k \in \{0,..,M\text{-}1\}$ est la position $M$-aire PPM du symbole.

Alternativement, les symboles d'information peuvent être transmis au moyen d'une modulation d'amplitude (PAM). Dans ce cas, le signal modulé peut s'écrire :

$$s_k(t) = \sum_{n=0}^{N_s-1} a^{(k)}.w(t - nT_s - c_k(n)T_c) \qquad (7)$$

où $a^{(k)}=2m'\text{-}1\text{-}M'$ avec $m'=1,..,M'$, est le symbole $M'$-aire de la modulation PAM. On peut par exemple utiliser une modulation BPSK ($M'=2$).

Les modulations PPM et PAM peuvent aussi être combinées en une modulation composite $M.M'$-aire, notée conventionnellement $M$-PPM-$M'$-PAM. Le signal modulé a alors la forme générale suivante :

$$s_k(t) = \sum_{n=0}^{N_s-1}\sum_{m=0}^{M-1} a_m^{(k)}.w(t - nT_s - c_k(n)T_c - m\varepsilon) \qquad (8)$$

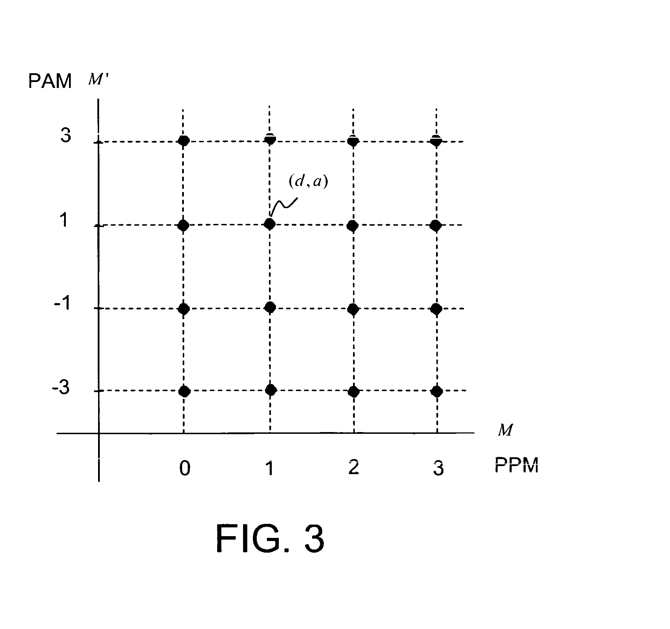

L'alphabet de cette modulation de cardinal $M.M'$ a été représenté en Fig. 3. Pour chacune des $M$ positions temporelles, $M'$ amplitudes de modulation sont possibles. Un symbole $(d,a)$ de l'alphabet peut être représenté par une séquence $a_m$, m=0,..,$M$-1 avec $a_m=\delta(m\text{-}d)a$ où $d$ est une position de la modulation PPM, $a$ une amplitude de la modulation PAM et $\delta(.)$ la distribution de Dirac.

Au lieu de séparer les différents utilisateurs au moyen de codes de sauts temporels, il est également possible de les séparer par des codes orthogonaux, par exemple des codes de Hadamard, comme en DS-CDMA. On parle alors de DS-UWB (*Direct Spread* UWB). Dans ce cas on a pour l'expression du signal non modulé, correspondant à (5) :

$$s_k(t) = \sum_{n=0}^{N_s-1} b_n^{(k)} w(t - nT_s) \qquad (9)$$

où $b_n^{(k)}$, $n=0,..,N_s$-1 est la séquence d'étalement de l'utilisateur $k$. On remarque que l'expression (9) est analogue à celle d'un signal DS-CDMA classique. Elle en diffère cependant par le fait que les chips sont n'occupent pas toute la trame mais sont répartis à la période $T_s$. On a représenté en Fig. 2B un signal DS-UWB associé à un utilisateur $k$.

Comme précédemment, les symboles d'information peuvent être transmis au moyen d'une modulation PPM, d'une modulation PAM ou d'une modulation composite M-PPM-$M'$-PAM. Le signal DS-UWB modulé en amplitude correspondant au signal TH-UWB (7) peut s'exprimer, en conservant les mêmes notations :

$$s_k(t) = \sum_{n=0}^{N_s-1} a^{(k)} b_n^{(k)}.w(t-nT_s) \qquad (10)$$

Enfin, il est connu de combiner codes de sauts temporels et codes d'étalement spectral pour offrir des accès multiples aux différents utilisateurs. On obtient ainsi un signal UWB impulsionnel TH-DS-UWB de forme générale :

$$s_k(t) = \sum_{n=0}^{N_s-1} b_n^{(k)}.w(t-nT_s-c_k(n)T_c) \qquad (11)$$

On a représenté en Fig. 2C un signal TH-DS-UWB associé à un utilisateur $k$. Go signal peut être modulé par une modulation composite $M$-PPM-$M'$PAM. On obtient alors pour le signal modulé :

$$s_k(t) = \sum_{n=0}^{N_s-1}\sum_{m=0}^{M-1} a_m^{(k)} b_n^{(k)}.w(t-nT_s-c_k(n)T_c-m\varepsilon) \qquad (12)$$

Il est connu de l'état de la technique d'utiliser des signaux UWB dans des systèmes MIMO. Dans ce cas, chaque antenne transmet un signal UWB modulé en fonction d'un symbole d'information ou d'un bloc de tels symboles (STBC).

Les techniques de codage spatio-temporel initialement développées pour des signaux à bande étroites ou pour le DS-CDMA s'appliquent mal aux signaux UWB impulsionnels. En effet, les codes spatio-temporels connus, comme le code d'or sont généralement à coefficients complexes et portent par conséquent une information de phase. Or, il est excessivement difficile de récupérer cette information de phase dans un signal à bande aussi large que celle des signaux UWB impulsionnels. Le support temporel très étroit des impulsions se prête beaucoup mieux à une modulation en position (PPM) ou en amplitude (PAM).

Un codage spatio-temporel des signaux UWB a été proposé dans l'article de Chadi Abou-Rjeily et al. intitulé « Space-Time coding for multiuser Ultra-Wideband communications » soumis à publication dans IEEE Transactions on Communications, Sept. 2005 et disponible sous www.tsi.enst.fr .

Conformément aux contraintes posées plus haut, le code spatio-temporel proposé est réel. Par exemple, pour une configuration à deux antennes en émission, le code peut s'écrire :

$$\mathbf{C} = \begin{pmatrix} \beta(a_1+\theta a_2) & \sqrt{2}\beta(a_3+\theta a_4) \\ \sqrt{2}\beta_1(a_3+\theta_1 a_4) & \beta_1(a_1+\theta_1 a_2) \end{pmatrix} \qquad (13)$$

avec $\beta = \dfrac{1}{\sqrt{1+\theta^2}}$ et $\beta_1 = \dfrac{1}{\sqrt{1+\theta_1^2}}$ ; $\mathbf{S}=(a_1,a_2,a_3,a_4)$ est un vecteur de symboles d'information PAM, à savoir

$a_i \in \{-M'+1,..,M'-1\}$.

Dans ce même article, on propose de généraliser ce code spatio-temporel au codage d'un bloc de symboles d'information appartenant à un alphabet PPM-PAM. Pour une configuration à deux antennes d'émission, ce code peut s'exprimer par la matrice de taille 2Mx2:

$$\mathbf{C} = \begin{pmatrix} \beta(a_{1,0} + \theta a_{2,0}) & \sqrt{2}\beta(a_{3,0} + \theta a_{4,0}) \\ \vdots & \vdots \\ \beta(a_{1,M-1} + \theta a_{2,M-1}) & \sqrt{2}\beta(a_{3,M-1} + \theta a_{4,M-1}) \\ \sqrt{2}\beta_1(a_{3,0} + \theta_1 a_{4,0}) & \beta_1(a_{1,0} + \theta_1 a_{2,0}) \\ \vdots & \vdots \\ \sqrt{2}\beta_1(a_{3,M-1} + \theta_1 a_{4,M-1}) & \beta_1(a_{1,M-1} + \theta_1 a_{2,M-1}) \end{pmatrix} \qquad (14)$$

Chaque symbole d'information $\mathbf{a}_i = (a_{i,0},...,a_{i,M-1})$ est ici un vecteur représentant un élément de l'alphabet $M$-PPM-$M'$-PAM avec $a_{i,m} = a_i\delta(m-d_i)$ où $a_i$ est un élément de l'alphabet $M$-PAM et $d_i$ de l'alphabet $M'$-PPM. Le bloc de symboles d'information codés par le code $\mathbf{C}$ n'est autre que $\mathbf{S} = (\mathbf{a}_1, \mathbf{a}_2, \mathbf{a}_3, \mathbf{a}_4)$.

Plus précisément, le bloc de symboles d'information $\mathbf{S}$ donne lieu à la génération des signaux UWB selon les expressions données ci-après. On a supposé, pour simplifier les notations, une utilisation mono utilisateur (pas d'indexation par $k$, ni de séquence d'étalement).

L'antenne 1 transmet pendant la durée de la première trame $T_f$ le signal :

$$s^1(t) = \beta \sum_{n=0}^{N_s-1} \sum_{m=0}^{M-1} (a_{1,m} + \theta a_{2,m}) w(t - nT_s - c(n)T_c - m\varepsilon) \qquad (15)$$

signal, qui correspond au premier vecteur colonne des $M$ premières lignes du code (14).

L'antenne 2 transmet simultanément pendant la durée de la première trame $T_f$ le signal :

$$s^2(t) = \beta\sqrt{2} \sum_{n=0}^{N_s-1} \sum_{m=0}^{M-1} (a_{3,m} + \theta a_{4,m}) w(t - nT_s - c(n)T_c - m\varepsilon) \qquad (16)$$

signal qui correspond au second vecteur colonne des $M$ premières lignes du code.

L'antenne 1 transmet ensuite pendant la durée de la seconde trame, en prenant à nouveau l'origine des temps au début de la trame :

$$s^1(t) = \beta_1\sqrt{2} \sum_{n=0}^{N_s-1} \sum_{m=0}^{M-1} (a_{3,m} + \theta a_{4,m}) w(t - nT_s - c(n)T_c - m\varepsilon) \qquad (17)$$

signal qui correspond au premier vecteur colonne des $M$ dernières lignes du code.

Enfin l'antenne 2 transmet simultanément pendant la durée de la seconde trame le signal:

$$s^2(t) = \beta_1 \sum_{n=0}^{N_s-1} \sum_{m=0}^{M-1} (a_{1,m} + \theta a_{2,m}) w(t - nT_s - c(n)T_c - m\varepsilon) \qquad (18)$$

signal qui correspond au second vecteur colonne des $M$ dernières lignes du code.

Le code spatio-temporel défini ci-dessus présente de très bonnes performances en terme de diversité. Toutefois son gain de codage est inférieur à celui du code d'or défini par (4). En outre, le terme scalaire $\sqrt{2}$ apparaissant dans la matrice (14) crée, à chaque trame, un déséquilibre énergétique entre les antennes.

Un but de la présente invention est de proposer un code spatio-temporel réel pour un système MIMO à signaux UWB impulsionnels qui possède un gain de codage supérieur au code spatio-temporel réel précité. Un autre but de la présente invention est de prévoir un code spatio-temporel réel pouvant s'appliquer à un système MIMO avec un nombre quelconque d'antennes. Enfin, un autre but de la présente invention est de proposer un code spatio-temporel présentant à chaque trame une distribution d'énergie uniforme sur les différentes antennes.

## EXPOSÉ DE L'INVENTION

La présente invention est définie par un procédé de codage spatio-temporel pour système de transmission UWB comprenant au moins deux éléments radiatifs, ledit procédé codant un bloc de symboles d'information ($\mathbf{S}=(a_1, a_2...,a_{p2})$) appartenant à un alphabet de modulation $M$-PPM ou de modulation composite $M$-PPM-M'-PAM avec $M$ pair, en une séquence de vecteurs ($\mathbf{s}^{i,j}, \Omega\mathbf{s}^{i,j}$) les composantes d'un vecteur étant destinées à moduler un signal UWB impulsionnel pour un élément radiatif dudit système et pour un intervalle de transmission donné ($T_f$). Lesdits vecteurs sont définis comme les éléments de la matrice :

$$\mathbf{C} = \begin{pmatrix} \mathbf{s}^{1,1} & \mathbf{s}^{2,1} & \mathbf{s}^{3,1} & \cdots & \mathbf{s}^{P,1} \\ \Omega\mathbf{s}^{P,2} & \mathbf{s}^{1,2} & \mathbf{s}^{2,2} & \cdots & \mathbf{s}^{P-1,2} \\ \vdots & \Omega\mathbf{s}^{P,3} & \mathbf{s}^{1,3} & \ddots & \vdots \\ \Omega\mathbf{s}^{3,P-1} & \ddots & \ddots & \ddots & \mathbf{s}^{2,P-1} \\ \Omega\mathbf{s}^{2,P} & \Omega\mathbf{s}^{3,P} & \cdots & \Omega\mathbf{s}^{P,P} & \mathbf{s}^{1,P} \end{pmatrix}$$

définie à une permutation près de ses lignes et/ou ses colonnes, une ligne correspondant à un intervalle de transmission et une colonne à un élément radiatif, où $P$ est le nombre d'éléments radiatifs et $\Omega$ est une matrice de taille $M \times M$ définie

par $\Omega = \begin{pmatrix} \omega & \mathbf{O}_{2x2} & \cdots & \mathbf{O}_{2x2} \\ \mathbf{O}_{2x2} & \omega & \cdots & \mathbf{O}_{2x2} \\ \vdots & \vdots & \ddots & \vdots \\ \mathbf{O}_{2x2} & \cdots & \mathbf{O}_{2x2} & \omega \end{pmatrix}$ où $\omega = \begin{pmatrix} \cos\theta & \sin\theta \\ -\sin\theta & \cos\theta \end{pmatrix}$ et $\mathbf{O}_{2x2}$ est la matrice nulle de taille 2x2,

$$\mathbf{s}^{i,j} = (\mathbf{R_j} \otimes \mathbf{I}_M) \begin{pmatrix} \mathbf{a}_{(i-1)P+i} \\ \mathbf{a}_{(i-1)P+P} \\ \vdots \\ \mathbf{a}_{iP} \end{pmatrix}$$ à une marge de $\pm 10\%$ près, où $\mathbf{I}_M$ est la matrice identité de taille $M \times M$, $\otimes$ est le

produit tensoriel, $\mathbf{a}_\ell$, $\ell=1,..,P^2$ sont les symboles d'information, $\mathbf{R}_j$ est un vecteur ligne de dimension $P$ correspondant à la $j^{\text{ème}}$ ligne d'une matrice orthogonale $\mathbf{R}$ générant le réseau de points $\Lambda=\{\mathbf{u}\Theta | \mathbf{u} \in \mathbf{Z}^P\}$ avec

$$\Theta = \begin{pmatrix} 1 & \theta_0 & \cdots & \theta_0^{P-1} \\ 1 & \theta_1 & \cdots & \theta_1^{P-1} \\ \vdots & \vdots & \cdots & \vdots \\ 1 & \theta_{P-1} & \cdots & \theta_{P-1}^{P-!} \end{pmatrix} \quad \text{où} \quad \theta_p = 2\cos\left(\frac{2(p+1)\pi}{N}\right) \quad \text{où } N \text{ est un entier positif tel que } \varphi(N)=2P \text{ où } \varphi(.)$$

est l'indicateur d'Euler et $\theta = \dfrac{2\pi}{N'}$ où $N'$ est un entier positif tel que $\varphi(N')\geq P$ et $N$, $N'$ premiers entre eux.

Selon une variante, la matrice orthogonale s'exprime sous la forme $\mathbf{R} = \Theta\mathbf{V}$ où $\mathbf{V}$ est une matrice dont les colonnes sont constituées par des vecteurs $\mathbf{v}^{(p)} = \left(v_0^{(p)}, v_1^{(p)}, ..., v_{P-1}^{(p)}\right)^T$ $p=0,..,P\text{-}1$ dont les coefficients sont rationnels.

L'invention concerne également un procédé de transmission d'une pluralité de symboles d'information appartenant à un alphabet de modulation $M$-PPM ou de modulation composite $M$-PPM-M'-PAM avec $M$ pair. Lesdits symboles d'information sont codés au moyen du codage spatio-temporel défini ci-dessus pour fournir $P^2$ vecteurs de dimension $M$, éléments de ladite matrice $\mathbf{C}$, les composantes de chacun de ces vecteurs modulant la position ou bien la position et l'amplitude des impulsions composant un signal UWB impulsionnel, pour obtenir $P^2$ signaux UWB impulsionnels modulés correspondants, les signaux étant respectivement transmis par les $P$ éléments radiatifs pendant $P$ intervalles de transmission.

Les éléments radiatifs peuvent être des antennes UWB, des diodes laser ou des diodes électroluminescentes.

Le signal impulsionnel sera avantageusement un signal TH-UWB, un signal DS-UWB ou encore un signal TH-DS-UWB.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO avec codage STBC connu de l'état de la technique ;
les Fig. 2A à 2C représentent les formes respectives de signaux TH-UWB, DS-UWB et TH-DS-UWB ;
la Fig. 3 représente un exemple de constellation d'une modulation PPM-PAM ;
la Fig. 4 représente schématiquement un système de transmission MIMO utilisant le codage spatio-temporel selon l'invention.

**EXPOSÉ DÉTAILLÉ DE MODES DE RÉALISATION PARTICULIERS**

L'idée à la base de l'invention est de créer un code spatio-temporel s'affranchissant à la fois des valeurs complexes $\alpha$ et $\alpha_1$ figurant dans le code d'or (4), incompatibles comme on l'a dit avec l'utilisation de signaux UWB impulsionnels, et des scalaires $\sqrt{2}$ figurant dans les codes (13) et (14), à l'origine d'une distribution déséquilibrée de l'énergie sur les antennes.

Le code spatio-temporel proposé s'applique aux systèmes MIMO avec un nombre quelconque $P$ d'antennes de transmission utilisant des signaux UWB impulsionnels dans lesquels les symboles d'information sont des éléments d'une modulation $M$-PPM-$M'$-PAM ou d'une modulation $M$-PPM, avec $M$ pair.

Le code proposé est représenté par la matrice de dimension $MP{\times}P$ :

$$C = \begin{pmatrix} s^{1,1} & s^{2,1} & s^{3,1} & \cdots & s^{P,1} \\ \Omega s^{P,2} & s^{1,2} & s^{2,2} & \cdots & s^{P-1,2} \\ \vdots & \Omega s^{P,3} & s^{1,3} & \ddots & \vdots \\ \Omega s^{3,P-1} & \ddots & \ddots & \ddots & s^{2,P-1} \\ \Omega s^{2,P} & \Omega s^{3,P} & \cdots & \Omega s^{P,P} & s^{1,P} \end{pmatrix} \tag{19}$$

où les termes $s^{i,j}$, $i=1,..,P, j=1,..,P$ sont des vecteurs de dimension $M$ dont les composantes seront précisées plus loin et $\Omega$ est une matrice de taille $M \times M$ définie par :

$$\Omega = \begin{pmatrix} \omega & O_{2x2} & \cdots & O_{2x2} \\ O_{2x2} & \omega & \cdots & O_{2x2} \\ \vdots & \vdots & \ddots & \vdots \\ O_{2x2} & \cdots & O_{2x2} & \omega \end{pmatrix} \tag{20}$$

où la matrice $O_{2x2}$ est la matrice de taille $2 \times 2$ dont tous les éléments sont nuls et $\omega$ est une matrice de rotation d'un angle $\theta$ qui sera précisé par la suite, soit :

$$\omega = \begin{pmatrix} \cos\theta & -\sin\theta \\ \sin\theta & \cos\theta \end{pmatrix} \tag{20'}$$

D'après (20) la matrice $\Omega$ obtenue par la réplication $M/2$ fois de la matrice élémentaire $\omega$ sur la diagonale, les autres éléments étant nuls.
Les vecteurs $s^{i,j}$ sont obtenus de la manière suivante :

$$s^{i,j} = (R_j \otimes I_M) \begin{pmatrix} a_{(i-1)P+1} \\ a_{(i-1)P+P} \\ \vdots \\ a_{iP} \end{pmatrix} \tag{21}$$

où $I_M$ est la matrice identité de taille $M \times M$, $\otimes$ est le produit tensoriel (ou de Kronecker) et les termes $a_\ell$, $\ell=1,..,P^2$ sont des vecteurs de dimension $M$ représentant les $P^2$ symboles d'information à coder. On rappelle que ces symboles sont des éléments d'une constellation de modulation $M$-PPM-$M'$-PAM ou $M$-PPM, c'est-à-dire $a_\ell=(a_{0,f}\, a_{1,f} \cdots a_{M-1,f})^T$ où les coefficients de ce vecteur sont des éléments d'un alphabet de modulation $M'$-PAM dans le premier cas et égaux à 1 dans le second. Le vecteur ligne $R_j$ de taille $1 \times P$ correspondant correspond à la $j^{ième}$ ligne de la matrice $R$ suivante :

$$R = \begin{pmatrix} \sum_{p=0}^{P-1} v_p^{(0)}\theta_0^{\ p} & \sum_{p=0}^{P-1} v_p^{(1)}\theta_0^{\ p} & \cdots & \sum_{p=0}^{P-1} v_p^{(P-1)}\theta_0^{\ p} \\ \sum_{p=0}^{P-1} v_p^{(0)}\theta_1^{\ p} & \sum_{p=0}^{P-1} v_p^{(1)}\theta_1^{\ p} & \cdots & \sum_{p=0}^{P-1} v_p^{(P-1)}\theta_1^{\ p} \\ \vdots & \vdots & \vdots & \vdots \\ \sum_{p=0}^{P-1} v_p^{(0)}\theta_{P-1}^{\ p} & \sum_{p=0}^{P-1} v_p^{(1)}\theta_{P-1}^{\ p} & \cdots & \sum_{p=0}^{P-1} v_p^{(P-1)}\theta_{P-1}^{\ p} \end{pmatrix} \qquad (22)$$

où les termes $v_p^{(q)}$ pour $p=0,..,P\text{-}1$ et $q=0,..,P\text{-}1$ sont des nombres rationnels et les valeurs $\theta_p$, $p=0,..,P\text{-}1$ sont définies par :

$$\theta_p = 2\cos\left(\frac{2(p+1)\pi}{N}\right) \qquad (23)$$

où $N$ est un entier positif choisi tel que $\varphi(N)=2P$ où $\varphi(.)$ est l'indicateur d'Euler, donnant pour chaque entier $N$ le nombre d'entiers positifs inférieurs ou égaux à $N$ et premiers avec ce dernier.

L'angle $\theta$ dans l'expression (20') est choisi tel que $\theta = \dfrac{2\pi}{N'}$ avec $\varphi(N')\geq P$ et $N$ , $N'$ premiers entre eux.

La matrice **R** est choisie orthogonale, c'est-à-dire $\mathbf{RR^T = I_P}$ où $\mathbf{I_P}$ est la matrice unité de taille $P{\times}P$.

On remarque que **R**=Θ**V** où Θ est la matrice de Vandermonde :

$$\Theta = \begin{pmatrix} 1 & \theta_0 & \cdots & \theta_0^{\ P-1} \\ 1 & \theta_1 & \cdots & \theta_1^{\ P-1} \\ \vdots & \vdots & \cdots & \vdots \\ 1 & \theta_{P-1} & \cdots & \theta_{P-1}^{\ P-1} \end{pmatrix} \qquad (24)$$

et **V** est la matrice dont les colonnes sont constituées des vecteurs $\mathbf{v}^{(p)} = \left(v_0^{(p)}, v_1^{(p)},...,v_{P-1}^{(p)}\right)^T$ .

Si l'on considère le réseau de points $\Lambda = \mathcal{L}(\Theta)$ de dimension $P$ engendré par la base constituée des vecteurs colonne de Θ, c'est-à-dire : $\Lambda=\{\mathbf{u}\Theta|\mathbf{u}\in\mathbf{Z}^P\}$, la détermination de la matrice **R** revient à la recherche d'une base orthogonale de $\Lambda$. Celle-ci peut être obtenue par exemple au moyen de l'algorithme de Lenstra-Lovàsz-Lenstra, dit aussi LLL, dont on trouvera une description dans l'article de A.K. Lenstra et al. intitulé « Factoring polynomials with rational coefficients » publié en 1982 dans Math. Ann. vol. 261, pages 515-534. On trouvera des exemples de matrices de rotation **R** dans l'article d'E. Bayer-Fluckiger et al. intitulé « New algebric constructions of rotated Zn-lattice constellations for the Rayleigh fading channel » publié dans IEEE Transactions on Information Theory, vol. 50, N° 4, 2004, pages 702-714.

Comme on peut le constater d'après l'expression (22), la matrice **R** est réelle et par conséquent la matrice du code spatio-temporel **C** définie en (19) l'est aussi. De même, étant donné la nature orthogonale de la matrice **R**, la répartition d'énergie du code spatio-temporel sur les différentes antennes est uniforme. En outre, le code spatio-temporel **C** permet de coder $P^2$ symboles d'information en utilisant $P$ antennes et $P$ utilisations du canal (PCU). Il est donc à débit maximal.

On peut montrer que le code est à diversité maximale $\forall P\geq2$.

Enfin, on peut également montrer qu'il présente un gain supérieur au code spatio-temporel réel connu de l'état de la technique.

Il est important de noter qu'une permutation des lignes et/ou des colonnes de la matrice **C** n'affecte pas les propriétés du code spatio-temporel. En effet, une permutation de colonnes revient à une simple permutation des antennes et une permutation de lignes (on entend ici par ligne, une ligne de vecteurs de dimension *M*) à une simple permutation des instants d'utilisation du canal.

En pratique, les éléments de la matrice **C** sont quantifiés sous forme numérique. On a pu toutefois constater qu'une erreur de quantification de moins de 10% par excès ou par défaut n'affectait pas sensiblement les performances du code.

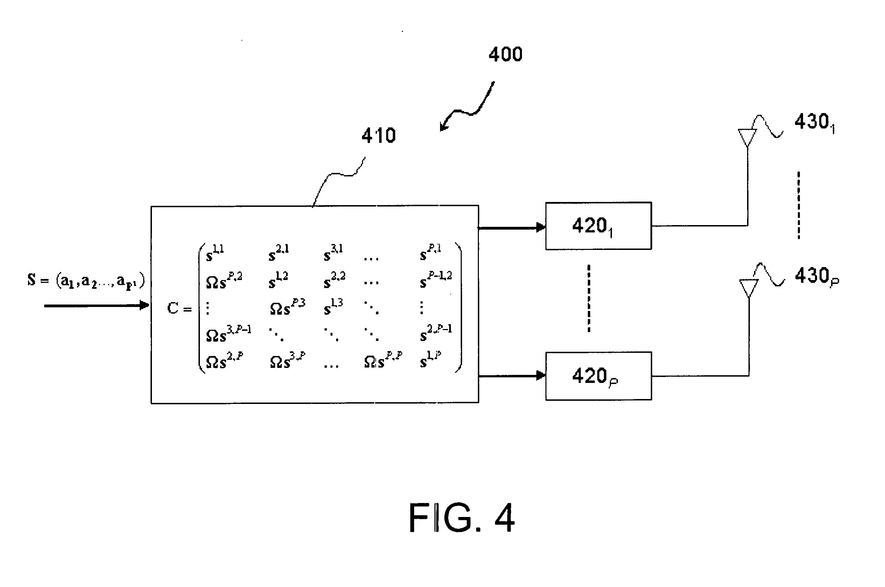

La Fig. 4 illustre un exemple de système de transmission utilisant le codage spatio-temporel selon l'invention.

Le système 400 reçoit des symboles d'informations par bloc **S**=(**a₁**,**a₂**...,**a_P2**) où les symboles $a_\ell$, $\ell$=1,..,$P^2$ sont des vecteurs de dimension *M* représentant des éléments d'une constellation de modulation *M*-PPM ou *M*-PPM-*M'*-PAM. Alternativement, les symboles d'information peuvent provenir d'une constellation *M.M'*-aire à condition de subir préalablement un transcodage (*mapping*) dans une constellation *M*-PPM-*M'*-PAM. Bien entendu, les symboles d'information peuvent être issus d'une ou plusieurs opérations bien connues de l'homme du métier telles que codage source, codage canal de type convolutionnel, par bloc ou bien encore turbocodage série ou parallèle, entrelacement, etc.

Le bloc de symboles d'information subit une opération de codage dans le codeur spatio-temporel 410. Plus précisément, le module 410 calcule les termes de la matrice **C** selon (19) ou l'une des variantes précitées.

Les *P* vecteurs colonnes constituant la première ligne de **C** sont d'abord transmis respectivement aux modulateurs UWB 420₁,...,420_P pour la première trame, puis les *P* vecteurs colonnes constituant la seconde, ligne, pour la seconde trame et ainsi de suite jusqu'à la transmission des *P* vecteurs colonnes de la dernière ligne de **C**, pour la *P*ième trame.

Chaque vecteur colonne possède *M* composantes correspondant aux *M* positions de 1a modulation PPM. Les modulateurs UWB 420₁,...,420_P génèrent, à partir des vecteurs colonnes qu'ils reçoivent, les signaux UWB impulsionnels modulés correspondants. De manière générale, les signaux UWB impulsionnels servant de support à la modulation peuvent être du type TH-UWB, DS-UWB ou TH-DS-UWB. Par exemple, pour un modulateur UWB 420_P, de type TH-UWB, associé à la *p*ième colonne de la matrice, le signal UWB impulsionnel modulé pour le premier intervalle de transmission sera (cf.· équation 8) :

$$s^p(t) = \sum_{n=0}^{N_s-1}\sum_{m=0}^{M-1} s_m^{p,1} . w(t - nT_s - c_k(n)T_c - m\varepsilon) \qquad (25)$$

où les valeurs $s_m^{p,1}$ sont les composantes PAM du vecteur **s^{p,1}**.

Les signaux UWB impulsionnels ainsi modulés sont transmis ensuite aux éléments radiatifs 430₁ à 430_P. Ces éléments radiatifs peuvent être des antennes UWB ou bien des diodes laser ou des DELs, fonctionnant par exemple dans le domaine infrarouge, associées à des modulateurs électro-optiques. Le système de transmission proposé peut alors être utilisé dans le domaine des télécommunications optiques sans fil.

Les signaux UWB transmis par le système illustré en Fig. 4 peuvent être traités par un récepteur multi-antenne de manière classique. Le récepteur pourra par exemple comprendre un étage de corrélation de type Rake suivi d'un étage de décision, utilisant par exemple un décodeur par sphère connu de l'homme du métier.

**Revendications**

**1.** Procédé de codage spatio-temporel pour système de transmission UWB comprenant au moins deux éléments radiatifs, ledit procédé codant un bloc de symboles d'information (**S**=(**a₁**,**a₂**...,**a_P2**)) appartenant à un alphabet de modulation *M*-PPM ou de modulation composite M-PPM-M'-PAM avec *M* pair, en une séquence de vecteurs (**s**^{i,j}, $\Omega$**s**^{i,j}) les composantes d'un vecteur étant destinées à moduler un signal UWB impulsionnel pour un élément radiatif dudit système et pour un intervalle de transmission donné (*T_f*), **caractérisé en ce que** lesdits vecteurs sont définis comme les éléments de la matrice :

$$C = \begin{pmatrix} s^{1,1} & s^{2,1} & s^{3,1} & \cdots & s^{P,1} \\ \Omega s^{P,2} & s^{1,2} & s^{2,2} & \cdots & s^{P-1,2} \\ \vdots & \Omega s^{P,3} & s^{1,3} & \ddots & \vdots \\ \Omega s^{3,P-1} & \ddots & \ddots & \ddots & s^{2,P-1} \\ \Omega s^{2,P} & \Omega s^{3,P} & \cdots & \Omega s^{P,P} & s^{1,P} \end{pmatrix}$$

définie à une permutation près de ses lignes et/ou ses colonnes, une ligne correspondant à un intervalle de transmission et une colonne à un élément radiatif, où $P$ est le nombre d'éléments radiatifs et $\Omega$ est une matrice de taille

$M \times M$ définie par $\Omega = \begin{pmatrix} \omega & O_{2x2} & \cdots & O_{2x2} \\ O_{2x2} & \omega & \cdots & O_{2x2} \\ \vdots & \vdots & \ddots & \vdots \\ O_{2x2} & \cdots & O_{2x2} & \omega \end{pmatrix}$ où $\omega = \begin{pmatrix} \cos\theta & \sin\theta \\ -\sin\theta & \cos\theta \end{pmatrix}$ et $O_{2x2}$ est la matrice

nulle de taille $2\times2$, $s^{i,j} = (R_j \otimes I_M) \begin{pmatrix} a_{(i-1)P+1} \\ a_{(i-1)P+P} \\ \vdots \\ a_{iP} \end{pmatrix}$ à une marge de +10% près, où $I_M$ est la matrice identité de

taille $M \times M$, $\otimes$ est le produit tensoriel, $a_\ell$, $\ell=1,..,P^2$ sont les symboles d'information, $R_j$ est un vecteur ligne de dimension $P$ correspondant à la $j^{ieme}$ ligne d'une matrice orthogonale $R$ générant le réseau de points $\Lambda=\{u\Theta|u\in Z^P\}$

avec $\Theta = \begin{pmatrix} 1 & \theta_0 & \cdots & \theta_0^{P-1} \\ 1 & \theta_1 & \cdots & \theta_1^{P-1} \\ \vdots & \vdots & \cdots & \vdots \\ 1 & \theta_{P-1} & \cdots & \theta_{P-1}^{P-1} \end{pmatrix}$ où $\theta_p = 2\cos\left(\frac{2(p+1)\pi}{N}\right)$ où $N$ est un entier positif tel que $\varphi(N)=2P$

où $\varphi(.)$ est l'indicateur d'Euler et $\theta = \frac{2\pi}{N'}$ où $N'$ est un entier positif tel que $\varphi(N')\geq P$ et $N$, $N'$ premiers entre eux.

**2.** Procédé de codage spatio-temporel selon la revendication 1, **caractérisé en ce que** la matrice orthogonale s'exprime sous la forme $R=\Theta V$ où $V$ est une matrice dont les colonnes sont constituées par des vecteurs

$\mathbf{v}^{(p)} = \left(v_0^{(p)}, v_1^{(p)}, ..., v_{P-1}^{(p)}\right)^T$ $p=0,..,P-1$ dont les coefficients sont rationnels.

**3.** Procédé de transmission d'une pluralité de symboles d'information appartenant à un alphabet de modulation $M$-PPM ou de modulation composite $M$-PPM-M'-PAM avec $M$ pair, **caractérisé en ce que** lesdits symboles d'information sont codés au moyen du codage spatio-temporel selon la revendication 1 ou 2 pour fournir $P^2$ vecteurs de dimension $M$, éléments de ladite matrice $C$, les composantes de chacun de ces vecteurs modulant la position ou bien la position et l'amplitude des impulsions composant un signal UWB impulsionnel, pour obtenir $P^2$ signaux UWB impulsionnels modulés correspondants, les signaux étant respectivement transmis par les $P$ éléments radiatifs pendant $P$ intervalles de transmission.

**4.** Procédé de transmission selon la revendication 3, **caractérisé en ce que** les éléments radiatifs sont des antennes UWB.

**5.** Procédé de transmission selon la revendication 3, **caractérisé en ce que** les éléments radiatifs sont des diodes laser ou des diodes électroluminescentes.

**6.** Procédé selon l'une des revendications 3 à 5, **caractérisé en ce que** ledit signal impulsionnel est un signal TH-UWB.

**7.** Procédé selon l'une des revendications 3 à 5, **caractérisé en ce que** ledit signal impulsionnel est un signal DS-UWB.

**8.** Procédé selon l'une des revendications 3 à 5, **caractérisé en ce que** ledit signal impulsionnel est un signal TH-DS-UWB.

**Claims**

**1.** A space-time coding method for a UWB transmission system comprising at least two radiative elements, said method coding a block of information symbols ($\mathbf{S}=(\mathbf{a}_1,\mathbf{a}_2...,\mathbf{a}_{P2})$) belonging to an M-PPM modulation or M-PPM-M'-PAM composite modulation alphabet with M being even, into a sequence of vectors ($\mathbf{s}^{i,j},\Omega\mathbf{s}^{i,j}$), the components of a vector being intended to modulate a UWB pulse signal for a radiative element of said system and for a given transmission interval ($T_f$), **characterized in that** said vectors are defined as the elements of the matrix:

$$\mathbf{C} = \begin{pmatrix} \mathbf{s}^{1,1} & \mathbf{s}^{2,1} & \mathbf{s}^{3,1} & \dots & \mathbf{s}^{P,1} \\ \Omega\mathbf{s}^{P,2} & \mathbf{s}^{1,2} & \mathbf{s}^{2,2} & \cdots & \mathbf{s}^{P-1,2} \\ \vdots & \Omega\mathbf{s}^{P,3} & \mathbf{s}^{1,3} & \ddots & \vdots \\ \Omega\mathbf{s}^{3,P-1} & \ddots & \ddots & \ddots & \mathbf{s}^{2,P-1} \\ \Omega\mathbf{s}^{2,P} & \Omega\mathbf{s}^{3,P} & \dots & \Omega\mathbf{s}^{P,P} & \mathbf{s}^{1,P} \end{pmatrix}$$

defined to within one permutation of its lines and/or its columns, a line corresponding to a transmission interval and a column to a radiative element, wherein $P$ is the number of radiative elements and $\Omega$ is a matrix of size $M\times M$

defined by $\Omega = \begin{pmatrix} \omega & \mathbf{O}_{2x2} & \cdots & \mathbf{O}_{2x2} \\ \mathbf{O}_{2x2} & \omega & \cdots & \mathbf{O}_{2x2} \\ \vdots & \vdots & \ddots & \vdots \\ \mathbf{O}_{2x2} & \cdots & \mathbf{O}_{2x2} & \omega \end{pmatrix}$ wherein $\omega = \begin{pmatrix} \cos\theta & \sin\theta \\ -\sin\theta & \cos\theta \end{pmatrix}$ and $\mathbf{O}_{2x2}$ is the zero matrix

of size $2\times 2$, $\mathbf{s}^{i,j} = (\mathbf{R_j} \otimes \mathbf{I}_M) \begin{pmatrix} \mathbf{a}_{(i-1)P+1} \\ \mathbf{a}_{(i-1)P+P} \\ \vdots \\ \mathbf{a}_{iP} \end{pmatrix}$ to within a margin of $\pm 10\%$, wherein $\mathbf{I}_M$ is the identity matrix of size

$M\times M$, $\otimes$ is the tensor product, $\mathbf{a}_\ell,\ell=1,..,P^2$ are the information symbols, $\mathbf{R}_j$ is a line vector of dimension $P$ corresponding to the $j$th line of an orthogonal matrix R generating the lattice points $\Lambda=\{\mathbf{u}\Theta|\mathbf{u}\in\mathbf{Z}^P\}$ with

$$\Theta = \begin{pmatrix} 1 & \theta_0 & \cdots & \theta_0^{P-1} \\ 1 & \theta_1 & \cdots & \theta_1^{P-1} \\ \vdots & \vdots & \cdots & \vdots \\ 1 & \theta_{P-1} & \cdots & \theta_{P-1}^{P-1} \end{pmatrix}$$ where $\theta_p = 2\cos\left(\dfrac{2(p+1)\pi}{N}\right)$ wherein $N$ is a positive integer such that $\varphi$

$(N)=2P$ wherein $\varphi(.)$ is the Euler indicator and $\theta = \dfrac{2\pi}{N'}$ wherein $N'$ is a positive integer such that $\varphi(N')\geq P$ and $N$, $N'$ are prime together.

2. The space-time coding method according to claim 1, **characterized in that** the orthogonal matrix is expressed as

 **R**=$\Theta$**V** wherein **V** is a matrix, the columns of which are formed by vectors $\mathbf{v}^{(p)} = \left(v_0^{(p)}, v_1^{(p)}, ..., v_{P-1}^{(p)}\right)^T$ $p=0,..,P-$ 1, the coefficients of which are rational.

3. A method for transmitting a plurality of information symbols belonging to an *M*-PPM modulation or *M*-PPM-*M'*-PAM modulation alphabet with *M* being even, **characterized in that** said information symbols are coded by means of the space-time coding according to claim 1 or 2 in order to provide $P2$ vectors of dimension M, elements of said matrix **C**, the components of each of these vectors modulating the position or else the position and amplitude of the pulses making up a UWB pulse signal, in order to obtain $P2$ corresponding modulated UWB pulse signals, the signals being respectively transmitted by the *P* radiated elements during *P* transmission intervals.

4. The transmission method according to claim 3, **characterized in that** the radiated elements UWB are antennas.

5. The transmission method according to claim 3, **characterized in that** the radiated elements are laser diodes or light-emitting diodes.

6. The method according to any of claims 3 to 5, **characterized in that** said pulse signal is a TH-UWB signal.

7. The method according to any of claims 3 to 5, **characterized in that** said pulse signal is a DS-UWB signal.

8. The method according to any of claims 3 to 5, **characterized in that** said pulse signal is a TH-DS-UWB signal.

**Patentansprüche**

1. Raum-Zeit-Codierverfahren für ein UWB-Übertragungssystem, das wenigstens zwei Strahlungselemente enthält, wobei das Verfahren einen Block von Informationssymbolen ( **S** = (**a$_1$**, **a$_2$**..., **a$_{p2}$**)), der zu einem Alphabet der Modulation M-PPM oder der Verbundmodulation M-PPM-M'- PAM mit geradem M gehört, in eine Sequenz von Vektoren (**s**$^{i.j}$ , $\Omega$**s**$^{i.j}$) codiert, wobei die Komponenten eines Vektors dazu ausgelegt sind, ein UWB-Pulssignal für ein Strahlungselement des Systems und für ein vorgegebenes Übertragungsintervall ($T_f$) zu modulieren, **dadurch gekennzeichnet, dass** die Vektoren definiert sind als die Elemente der Matrix:

$$\mathbf{C} = \begin{pmatrix} \mathbf{s}^{1.1} & \mathbf{s}^{2.1} & \mathbf{s}^{3.1} & \cdots & \mathbf{s}^{P.1} \\ \Omega\mathbf{s}^{P.2} & \mathbf{s}^{1.2} & \mathbf{s}^{2.2} & \cdots & \mathbf{s}^{P-1.2} \\ \vdots & \Omega\mathbf{s}^{P.3} & \mathbf{s}^{1.3} & \ddots & \vdots \\ \Omega\mathbf{s}^{3.P-1} & \ddots & \ddots & \ddots & \mathbf{s}^{2.P-1} \\ \Omega\mathbf{s}^{2.P} & \Omega\mathbf{s}^{3.P} & \cdots & \Omega\mathbf{s}^{P.P} & \mathbf{s}^{1.P} \end{pmatrix}$$

die bis auf eine Permutation ihrer Zeilen und/oder ihrer Spalten definiert ist, wobei eine Zeile einem Übertragungsintervall und eine Spalte einem Strahlungselement entspricht, wobei P die Zahl von Strahlungselementen ist, und

wobei $\Omega$ eine Matrix der Größe MxM ist, definiert durch $\Omega = \begin{pmatrix} \omega & \mathbf{0}_{2x2} & \cdots & \mathbf{0}_{2x2} \\ \mathbf{0}_{2x2} & \omega & \cdots & \mathbf{0}_{2x2} \\ \vdots & \vdots & \ddots & \vdots \\ \mathbf{0}_{2x2} & \cdots & \mathbf{0}_{2x2} & \omega \end{pmatrix}$ wobei

$\omega = \begin{pmatrix} \cos\theta & \sin\theta \\ -\sin\theta & \cos\theta \end{pmatrix}$ und $\mathbf{0}_{2x2}$ die Nullematrix der Größe 2x2 ist, und $\mathbf{s}^{i,j} = (\mathbf{R_j} \otimes \mathbf{I}_M) \begin{pmatrix} a_{(i-1)P+1} \\ a_{(i-1)P+P} \\ \vdots \\ a_{iP} \end{pmatrix}$ bis

auf eine Spanne von $\pm 10\%$, wobei $\mathbf{I}_M$ die Identitätsmatrix der Größe $M$x$M$ ist, $\otimes$ das Tensorprodukt ist, $a_\ell,\ell=1,...,$ $P^2$ die Informationssymbole sind, $\mathbf{R}_j$ ein Zeilenvektor der Dimension P entsprechend der j-ten Zeile einer orthogonalen

Matrix $\mathbf{R}$ ist zur Erzeugung des Netzes von Punkten $\Lambda=\{u\Theta|u\in Z^P\}$ mit $\Theta = \begin{pmatrix} 1 & \theta_0 & \cdots & \theta_0^{P-1} \\ 1 & \theta_1 & \cdots & \theta_1^{P-1} \\ \vdots & \vdots & \cdots & \vdots \\ 1 & \theta_{P-1} & \cdots & \theta_{P-1}^{P-1} \end{pmatrix}$, wobei

$\theta_{p,} = 2\cos\left(\dfrac{2(p+1)\pi}{N}\right)$, wobei N eine positive ganze Zahl derart ist, dass $\varphi(\mathbf{N})=\mathbf{2P}$ wobei $\varphi(.)$der Euler-

Indikator und $\theta = \dfrac{2\pi}{N'}$ ist, wobei $N'$ eine positive ganze Zahl derart ist, dass $\varphi(\mathbf{N'})\geq\mathbf{P}$, und wobei $N$, $N'$ teilerfremd sind.

2. Raum-Zeit-Codierverfahren nach Anspruch 1, **dadurch gekennzeichnet, dass** die orthogonale Matrix ausgedrückt werden kann in der Form R = $\Theta$V wobei **V** eine Matrix ist, deren Spalten gebildet sind durch Vektoren

$\mathbf{V}^{(p)} = \left(v_o^{(p)}, v_1^{(p)}, \ldots, v_{P-1}^{(p)}\right)^T$ $p=0,...$ $P$-1 deren Koeffizienten rational sind.

3. Verfahren zur Übertragung einer Mehrzahl von Informationssymbolen, die zu einem Alphabet der Modulation M-PPM oder der Verbundmodulation M-PPM-M'-PAM mit geradem M gehören, **dadurch gekennzeichnet, dass** die Informationssymbole mittels der Raum-Zeit-Codierung nach Anspruch 1 oder 2 codiert sind, um P$^2$ Vektoren der Dimension M als Elemente der Matrix **C** zu liefern, wobei die Komponenten jedes dieser Vektoren die Position oder auch die Position und die Amplitude der Pulse modulieren, die ein UWB-Pulssignal bilden, um $P^2$ entsprechende modulierte UWB-Pulssignale zu erhalten, wobei die Signale jeweils während $P$ Übertragungsintervallen durch die $P$ Strahlungselemente übertragen werden.

4. Übertragungsverfahren nach Anspruch 3, **dadurch gekennzeichnet, dass** die Strahlungselemente UWB-Antennen sind.

5. Übertragungsverfahren nach Anspruch 3, **dadurch gekennzeichnet, dass** die Strahlungselemente Laserdioden oder Elektrolumineszenzdioden sind.

6. Verfahren nach einem der Ansprüche 3 bis 5, **dadurch gekennzeichnet, dass** das Pulssignal ein TH-UWB-Signal ist.

7. Verfahren nach einem der Ansprüche 3 bis 5, **dadurch gekennzeichnet, dass** das Pulssignal ein DS-UWB-Signal ist.

8. Verfahren nach einem der Ansprüche 3 bis 5, **dadurch gekennzeichnet, dass** das Pulssignal ein TH-DS-UWB-Signal ist.

$$\mathbf{S} = (a_1, \ldots, a_b)$$

$$\mathbf{C} = \begin{pmatrix} c_{1,1} & c_{1,2} & \ldots & c_{1,P} \\ c_{2,1} & c_{2,2} & \ldots & c_{2,P} \\ \vdots & \vdots & \ddots & \vdots \\ c_{T,1} & c_{T,2} & \ldots & c_{T,P} \end{pmatrix}$$

FIG. 1

$T_c$

$T_s$

$c_k(n) = 7,1,4,7$

TH-UWB

FIG. 2A

$b_n^{(k)} = +1,-1,+1,-1$

DS-UWB

FIG. 2B

TH-DS-UWB

FIG. 2C

EP 2 070 199 B1

FIG. 3

$$S = (a_1, a_2 \ldots, a_{P'})$$

$$C = \begin{pmatrix} s^{1,1} & s^{2,1} & s^{3,1} & \ldots & s^{P,1} \\ \Omega s^{P,2} & s^{1,2} & s^{2,2} & \ldots & s^{P-1,2} \\ \vdots & \Omega s^{P,3} & s^{1,3} & \ddots & \vdots \\ \Omega s^{3,P-1} & \ddots & \ddots & \ddots & s^{2,P-1} \\ \Omega s^{2,P} & \Omega s^{3,P} & \ldots & \Omega s^{P,P} & s^{1,P} \end{pmatrix}$$

$400$

$410$

$420_1$

$420_P$

$430_1$

$430_P$

FIG. 4

EP 2 070 199 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J-C Belfiore et al.** The Golden code : a 2x2 full-rate space-time code with non-vanishing determinants. *IEEE Transactions on Information Theory,* Avril 2005, vol. 51 (4), 1432-1436
- **Frédérique Oggier et al.** Perfect space time block codes. *IEEE Transactions on Information Theory, www.comelec.enst.fr/∼belfiore*
- **Chadi Abou-Rjeily et al.** Space-Time coding for multiuser Ultra-Wideband communications. *IEEE Transactions on Communications,* Septembre 2005, www.tsi.enst.fr

- **A.K. Lenstra et al.** Factoring polynomials with rational coefficients. *Math. Ann.,* 1982, vol. 261, 515-534
- **d'E. Bayer-Fluckiger et al.** New algebric constructions of rotated Zn-lattice constellations for the Rayleigh fading channel. *IEEE Transactions on Information Theory,* 2004, vol. 50 (4), 702-714